# EUROPEAN PATENT APPLICATION

(11) **EP 4 803 737 A1**
(43) Date of publication of application: **09.09.2026**
(21) Application number: 24884088.6
(22) Date of filing: 05.08.2024
(51) Int. Cl.: F03D 7/02

(54) **PITCH CHANGE CONTROL METHOD FOR WIND TURBINE, AND WIND TURBINE**

(30) Priority: 31.10.2023 CN 202311433184
(71) Applicant: Beijing Goldwind Science & Creation Windpower Equipment Co. Ltd., Beijing 100176 (CN)
(72) Inventor: CAO, Zhigang, Beijing 100176 (CN); ZHANG, Zhihong, Beijing 100176 (CN); YANG, Xiao, Beijing 100176 (CN); JIN, Meng, Beijing 100176 (CN); MA, Lijuan, Beijing 100176 (CN)
(74) Representative: Hoffmann Eitle
(86) International application number: PCT/CN2024/109841
(87) International publication number: WO 2025/092081

(57) **Abstract**

A pitch change control method for a wind turbine, and a wind turbine. The pitch change control method comprises: on the basis of power data of a wind turbine, determining a corresponding blade roughness coefficient; on the basis of a preset pitch angle condition, determining a wind speed-pitch angle relation under the blade roughness coefficient; on the basis of the wind speed-pitch angle relation and wind speed data, determining a blade stall condition; and, in response to the wind turbine being in a blade stall state and according to the wind speed data and a preset pitch change control relation, controlling the wind turbine to change pitch. The control method can determine blade stall and perform a corresponding pitch change action while taking into account wind turbine power, so as to achieve a stall protection effect and improve the stability and reliability of the wind turbine.

## Description

### CROSS REFERENCE OF RELATED APPLICATION

The present disclosure claims the priority to Chinese Patent Application No. 202311433184.6 filed on October 31, 2023, which is incorporated herein by reference in its entirety.

### FIELD

The present disclosure relates to the field of wind power generation, and more specifically, to a pitch control method for a wind turbine and a wind turbine.

### BACKGROUND

With the trend toward larger wind turbines, an impeller size of a wind turbine becomes larger and larger, and a blade becomes longer and longer. To balance turbine cost, performance, and the like, a stall margin of the blade is required to be smaller and smaller. For a large impeller under a condition of low air density and high contamination, the wind turbine enters a stall state frequently. Once the stall state is entered, power cannot be increased, resulting in a significant reduction in energy production of the wind turbine.

In the related art, to solve the problem of a blade stall, a pitch angle is generally adjusted based on power to prevent the wind turbine from entering the stall state. However, once the wind turbine, especially a wind turbine with a large impeller, enters the stall state, the power remains stably in a low power range, and a power-based pitch control cannot be implemented, thereby failing to provide stall protection.

### SUMMARY

In view of the problem in the related art that a power-based pitch control method cannot be implemented after the wind turbine enters a stall state, which results in failure to provide stall protection, a pitch control method for a wind turbine and a wind turbine are provided in the present disclosure.

In a first aspect of the present disclosure, a pitch control method for a wind turbine is provided, and the pitch control method includes: determining, based on a current power dataset of the wind turbine, a current blade roughness coefficient set corresponding to a current wind speed dataset; determining, based on a predetermined pitch angle condition, wind speed-pitch angle relationships corresponding to the current blade roughness coefficient set; determining, based on the wind speed-pitch angle relationship and the current wind speed dataset, a blade stall condition for the current wind speed dataset; and performing pitch control on the wind turbine based on the current wind speed dataset and a predetermined pitch control relationship, in response to the blade stall condition indicating that the wind turbine is in a blade stall state.

In a second aspect of the present disclosure, a computer device is provided. The computer device includes at least one processor; and at least one memory storing computer-executable instructions, where the computer-executable instructions, when executed by the at least one processor, cause the at least one processor to perform the control method for a wind turbine according to the embodiments of the present disclosure.

In a third aspect of the present disclosure, a wind turbine is provided. The wind turbine includes the computer device according to the embodiments of the present disclosure.

In a fourth aspect of the present disclosure, a computer-readable storage medium is provided, where instructions in the computer-readable storage medium, when executed by at least one processor, cause the at least one processor to perform the pitch control method for a wind turbine according to the embodiments of the present disclosure.

It should be understood that the above general description and the detailed description hereinafter are only illustrative and explanatory and do not limit the present disclosure.

### BRIEF DESCRIPTION OF THE DRAWINGS

The drawings herein are incorporated in the specification and form a part of the specification, illustrating some embodiments consistent with the present disclosure. The drawings are provided for explaining the principles of the present disclosure together with the specification, rather than constituting an improper limitation of the present disclosure.
FIG. 1 is a schematic flowchart illustrating a pitch control method for a wind turbine according to an exemplary embodiment of the present disclosure;
FIG. 2 and FIG. 3 are schematic flowcharts each illustrating steps of determining a blade roughness coefficient in a pitch control method for a wind turbine according to an exemplary embodiment of the present disclosure;
FIG. 4 is a schematic flowchart illustrating steps of determining a wind speed-pitch angle relationship in a pitch control method for a wind turbine according to an exemplary embodiment of the present disclosure;
FIG. 5 is a schematic flowchart illustrating steps of performing pitch control for a wind turbine in a pitch control method for a wind turbine according to an exemplary embodiment of the present disclosure;
FIG. 6 is a schematic flowchart illustrating steps of determining a predetermined pitch control relationship in a pitch control method for a wind turbine according to an exemplary embodiment of the present disclosure;
FIG. 7 is a schematic flowchart illustrating steps of acquiring filtered historical operation data in a pitch control method for a wind turbine according to an exemplary embodiment of the present disclosure;
FIG. 8 is a schematic flowchart illustrating steps of determining a pitch-angle control condition in a pitch control method for a wind turbine according to an exemplary embodiment of the present disclosure;
FIG. 9 is a schematic flowchart illustrating an example of determining a predetermined pitch control relationship through a screening process in a pitch control method for a wind turbine according to an embodiment of the present disclosure;
FIG. 10 is a schematic flowchart illustrating an example of a logic for blade stall determination in a pitch control method for a wind turbine according to an embodiment of the present disclosure;
FIG. 11 is a schematic diagram illustrating a stall protection control strategy in a pitch control method for a wind turbine according to an exemplary embodiment of the present disclosure; and
FIG. 12 is a schematic diagram illustrating a control effect of a pitch control method for a wind turbine according to an exemplary embodiment of the present disclosure.

### DETAILED DESCRIPTION

Specific embodiments are provided below to assist readers to gain a comprehensive understanding of the method, device, and/or system described herein. Various alterations, modifications, and equivalents of the method, device, and/or system described herein will, however, be clear upon an understanding of the present disclosure. For example, an order of operations described herein is merely exemplary and the present disclosure is not limited to the order described here. The order of operations may be altered as would be clear upon an understanding the present disclosure, except for operations that must occur in a specific order. In addition, descriptions of features known in the art may be omitted for greater clarity and conciseness.

The features described herein may be implemented in different forms and should not be limited to the examples described herein. On the contrary, the examples described herein are provided to illustrate only some of feasible manners of implementing the method, device, and/or system described herein, and many other feasible manners would be clear upon an understanding the present disclosure.

As used herein, term ''and/or'' includes any one of listed items associated with the term, and any combination of any two or more of the items.

Although terms "first," "second," "third" and the like may be used herein to describe various members, components, regions, layers, or parts, these members, components, regions, layers, or parts should not be limited by these terms. On the contrary, these terms are only used to distinguish one member, component, region, layer, or part from another member, component, region, layer, or part. Therefore, without departing from the teachings of the examples, a first member, first component, first region, first layer, or first part referred to in the examples described herein may alternatively be referred to as a second member, second component, second region, second layer, or second part.

In the specification, when an element (such as a layer, region, or substrate) is described as being "on", "connected to" or "coupled to" another element, the element may be directly "on", "connected to" or "coupled to" the other element, or there may be one or more intermediate elements between the elements. On the contrary, when an element is described as being "directly on", "directly connected to" or "directly coupled to" another element, there is no intermediate element there between.

The terms used herein are only for describing various examples and are not used to limit the present disclosure. Unless clearly indicated in the context otherwise, a singular form is intended to include a plural form. The terms "include", "comprise", and "have" indicate the existence of a described feature, quantity, operation, component, element, and/or combination thereof, but do not exclude the existence or addition of one or more other features, quantities, operations, components, elements, and/or combinations thereof.

Unless otherwise defined, all terms (including technical terms and scientific terms) used herein have the same meanings as those commonly understood by an ordinary technical personnel in the art to which the present disclosure belongs upon an understanding of the present disclosure. Unless explicitly defined otherwise, terms (such as terms defined in a general dictionary) should be interpreted as having meanings consistent with their respective contexts in the relevant field and in the present disclosure, and should not be interpreted ideally or excessively formally.

In addition, in the description of the examples, the detailed description of well-known relevant structures or functions is omitted when it is believed that the detailed description may lead to ambiguity in the present disclosure.

As described above, in the related art, after the wind turbine enters a stall state, the power remains in a low power range stably, and a power-based pitch control cannot be implemented, thereby failing to provide stall protection.

In addition, in the related art, a manner of determining an impeller stall based on an angle of attack is not applicable to a long-flexible blade. A stall state determined based on an angle of attack for a single section of a blade cannot indicate the state of the whole blade, so that the wind turbine cannot be effectively protected in a timely manner.

In view of the issues described above, a pitch control method for a wind turbine, a computer device, a wind turbine and a computer-readable storage medium are provided according to the present disclosure, so as to address or at least alleviate the issues described above.

According to the pitch control method for a wind turbine, the computer device, the wind turbine and the computer-readable storage medium provided in the present disclosure, a current blade roughness coefficient set corresponding to the current wind speed dataset is determined based on current power dataset of the wind turbine; a corresponding wind speed-pitch angle relationship is determined to determine a blade stall condition which is for determining a blade stall; and when it is determined that the wind turbine is in a blade stall state, pitch control for the wind turbine is performed based on the current wind speed data and a predetermined pitch control relationship. Therefore, it is possible to determine the blade stall in consideration of the power of the wind turbine and perform a corresponding pitch control, so as to achieve stall protection and improve the stability and reliability of the wind turbine.

According to a first aspect of an exemplary embodiment of the present disclosure, a pitch control method for a wind turbine is provided. The pitch control method for the wind turbine may be performed by a computer device having a computational analysis function, for example, may be performed by at least one of a pitch control system for a wind turbine and a master system. The computer device implementing the method may be a terminal device or a server. The terminal device may be a tablet computer, a notebook computer, a digital assistant, or the like. The server may be a standalone server, a server cluster, a cloud computing platform or a virtualization center.

In an exemplary application scenario, the computer device implementing the pitch control method for a wind turbine according to an embodiment of the present disclosure may determine, based on current power dataset of the wind turbine, a current blade roughness coefficient set corresponding to the current wind speed dataset, and may determine, based on a predetermined pitch angle condition, a wind speed-pitch angle relationship corresponding to the current blade roughness coefficient set.

The computer device may determine a blade stall condition for the current wind speed dataset based on the wind speed-pitch angle relationships and the current wind speed dataset; and may perform, in response to the blade stall condition indicating that the wind turbine is in a blade stall state, pitch control on the wind turbine based on the current wind speed data and a predetermined pitch control relationship.

Here, the computer device may be communicatively connected to a database or a data management system, and the database or the data management system may store measured power data, wind speed data, pitch angle data, or estimated power data, wind speed data, and pitch angle data, so that the computer device may implement the method based on such measured or estimated power data, wind speed data, and pitch angle data.

According to the pitch control solution for the wind turbine provided in the present disclosure, the pitch control for the wind turbine may be performed based on the current wind speed dataset and the predetermined pitch control relationship. Therefore, it is possible to determine whether the blade is in the stall state in consideration of the power of the wind turbine and perform a corresponding pitch control, so as to achieve stall protection and improve the stability and reliability of the wind turbine.

The pitch control method for a wind turbine according to an exemplary embodiment of the present disclosure may include steps S110 to S140.

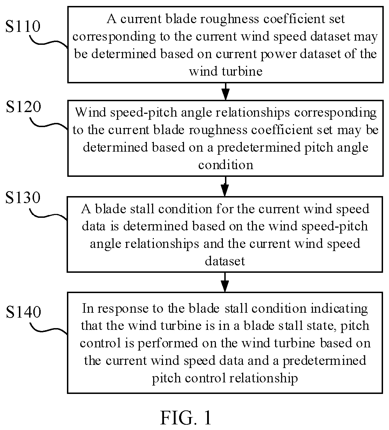

As shown in FIG. 1, in step S110, a current blade roughness coefficient set corresponding to the current wind speed dataset may be determined based on current power dataset of the wind turbine.

In an embodiment, the fouling degree of the blade of the wind turbine may affect power production of the wind turbine, that is, affects the output power of the wind turbine. Further, the output power is also related to the current wind speed. Therefore, according to the current power, the roughness of the blade corresponding to the current wind speed may be determined. Here, the roughness of the blade may refer to the fouling degree of the blade, and the greater the roughness is, the greater the fouling degree of the blade is.

In this step, the roughness (which may also be considered as the fouling degree) of the blade may be quantified, and is represented by a blade roughness coefficient. The greater the blade roughness coefficient is, the greater the fouling degree of the blade is.

As an example, in step S110, the current blade roughness coefficient set corresponding to the current wind speed dataset may be determined as below.

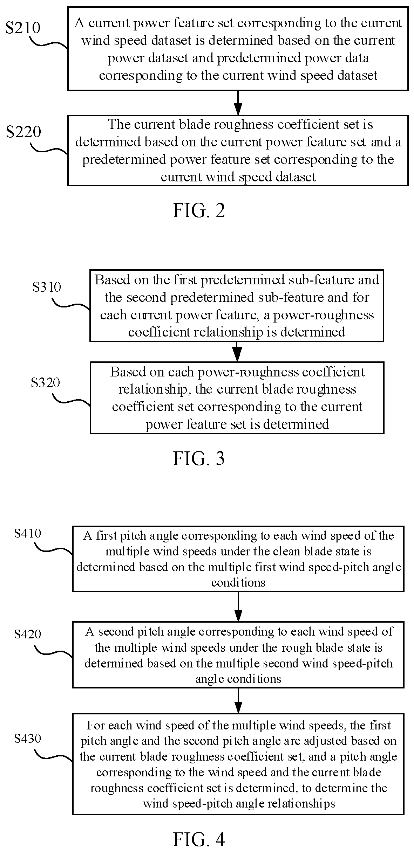

As shown in FIG. 2, in step S210, a current power feature set corresponding to the current wind speed dataset may be determined based on the current power dataset and predetermined power data corresponding to the current wind speed dataset.

Here, each current power feature in the current power feature set may represent a relationship between a piece of current power data in the current power dataset and the predetermined power data. For example, a current power feature Cp_actual may be expressed by the following equation (1): $Cp _ actual = {Power}_{i} / PowerTheory$ where, Power*ᵢ* represents a piece of current power data, which may be collected in real time or may be estimated based on the current operation data, and PowerTheory represents the predetermined power data. For example, multiple pieces of power data within a time period may be collected or estimated as the current power dataset, and Power*ᵢ* may represent the i-th piece of power data, i being a positive integer. The PowerTheory may be, for example, output power corresponding to the current wind speed dataset and predetermined for the wind turbine, and the may be theoretically calculated.

Although an example of determining the current power feature set is described by using equation (1), it is not limited thereto. For example, the determining may be performed by adjusting the equation (1) (for example, introducing a weighting coefficient or the like) to obtain a new equation, or may be determined by other equations that can represent a relationship between a piece of current power data and the predetermined power data, for example, an equation of calculating a difference, a squared difference of the two, or the like.

The predetermined power data described above may be predetermined theoretical power data, which may be determined according to actual needs. Here, according to an embodiment of the present disclosure, an example of determining predetermined power data is described.

As an example, the predetermined power data may be determined based on current ambient data, the current wind speed dataset, and blade sweeping data of the wind turbine.

In an embodiment, the ambient data may include, for example, an air density of an area where the wind turbine is located. The blade sweeping data may include, for example, a swept area of the blade. The swept area of the blade refers to a required swept range of the blade during the impeller rotation, or a space required for the impeller rotation. As an example, the predetermined power data PowerTheory may be expressed by the following equation (2): $PowerTheory = k ⋅ ρ ⋅ {ν}^{3} ⋅ S$ where *k* represents a predetermined coefficient, which may be set according to actual needs, for example, may be 0.5; *ρ* represents the air density of the area where the wind turbine is located; *v* represents an average value of current wind speeds; and *S* represents the swept area of the blade of the wind turbine.

Although an example of determining the predetermined power data is described by using the equation (2), it is not limited thereto. For example, the determining may be performed by adjusting the equation (2) (for example, introducing a weighting coefficient or the like) to obtain an adjusted equation, or may be performed by using other parameters representing the ambient data, the average value of current wind speeds, the blade sweeping condition. For example, when the wind speed is a predicted wind speed, the wind speed v may be replaced by using an equation or a model of the predicted wind speed.

By determining the predetermined power data through the example described above, the condition of the environment where the wind turbine is located and the blade sweeping condition are taken into consideration, such that the predetermined power data is determined in combination with multiple factors. On the basis of the predetermined power data determined in this way, the current power feature set determined accordingly can better reflect the difference between a piece of current power data and such theoretical power data, thus enabling the calculated current power feature set to be more representative.

In step S220, the current blade roughness coefficient set is determined based on the current power feature set and a predetermined power feature set corresponding to the current wind speed dataset.

In this step, multiple predetermined power sub-features may be predetermined for each of multiple wind speeds in the current wind speed dataset, and each of the multiple predetermined power sub-features may correspond to a blade fouling degree. In this way, for each current power feature, by comparing the current power feature with each of the multiple predetermined power sub-features, the blade fouling degree corresponding to the current power feature may be determined, so that the current blade fouling degree may be determined based on the power.

As an example, for each wind speed, the predetermined power feature may include a first predetermined sub-feature corresponding to a clean blade condition and a second predetermined power sub-feature corresponding to a rough blade condition. In this example, in step S220, the current blade roughness coefficient may be determined in the following manner.

As shown in FIG. 3, in step S310, based on the first predetermined sub-feature and the second predetermined sub-feature and for each current power feature, a power-roughness coefficient relationship may be determined.

In this step, based on the first predetermined sub-feature and the second predetermined sub-feature and for each current power feature, a power-roughness coefficient relationship may be constructed. For example, interpolation may be performed to construct the power-roughness coefficient relationship represented by the following equation(3): ${k}_{i} = \left(Cp_actual-Cp_rough\right) / \left(Cp_design-Cp_rough\right)$ where k*ᵢ* represents a current blade roughness coefficient in the current blade roughness coefficient set, Cp_actual represents a current power feature, Cp_rough represents the second predetermined sub-feature, and Cp_design represents the first predetermined sub-feature. Here, the current blade roughness coefficient is a quantitative representation of the blade roughness degree, which may represent a roughness ratio of the blade.

In addition, linear interpolation is adopted in the above equation (3) to determine the power-roughness coefficient relationship, but it is not limited thereto. Other interpolation methods may be performed.

In step S320, based on each power-roughness coefficient relationship, the current blade roughness coefficient set corresponding to the current power feature set is determined.

In this step, a current power feature may be substituted into a corresponding equation representing the power-roughness coefficient relationship, so as to obtain the current blade roughness coefficient corresponding to the current power feature.

In the determining of the current blade roughness coefficient set above, a correlation existing between the blade roughness degree and the power of the wind turbine is considered. By performing comparison the current power feature set with the predetermined power feature, the blade roughness degree is quantified. Compared with the non-qualitative representation of the blade roughness degree in the related art, the blade roughness degree is quantified in the present disclosure, thereby facilitating to introduce of the blade roughness degree into the control strategy of the wind turbine.

Although it is described above that the predetermined power feature includes the first predetermined sub-feature and the second predetermined sub feature, and the process of determining the current blade roughness coefficient is described by using the equation (3) as an example, the present disclosure is not limited thereto. The predetermined power feature may include more or less predetermined power sub-features. For example, predetermined power sub-features each corresponding to one of three or more fouling degrees of the blade. Based on such predetermined power sub-features, the power-roughness coefficient relationship may be obtained by interpolation, fitting, or the like, to determine the current blade roughness coefficient set.

In addition, as an example, before step S110, it may be determined whether a current rotational speed of the wind turbine is in an optimal tracking range during operation of the wind turbine; in response to the current rotational speed being in the optimal tracking range, step S110 may be performed to determine the current blade roughness coefficient set corresponding to the current wind speed dataset; and in response to the current rotational speed being not in the optimal tracking range, step S110 may not be performed. Here, the optimal tracking range may refer to a rotational speed state of the wind turbine in which the blade stall state may be determined, and in the optimal tracking range, control of the wind turbine is performed based on the rotational speed.

In this example, the pitch control method according to an embodiment of the present disclosure may further include: acquiring current rotational speed data of the wind turbine; and in response to the current rotational speed data and a predetermined rated rotational speed of the wind turbine satisfying a predetermined rotational speed relationship, performing the determining a current blade roughness coefficient corresponding to the current wind speed data.

Here, the predetermined rotational speed relationship may represent a relationship between the current rotational speed data and the rated rotational speed of the wind turbine. For example, the predetermined rotational speed relationship may be W<Wset, where W represents the current rotational speed, and Wset represents the rated rotational speed of the wind turbine.

If the predetermined rotational speed relationship is satisfied, it may be considered that the wind turbine is currently in the optimal tracking range. When the wind turbine runs in the optimal tracking range, it is in a non-stall state; and in this case, it is possible to: use the blade characteristics in the optimal tracking range to determine the actual operating condition (for example, the roughness) of the blade; calculate the power feature based on the wind speed data and the power data in the optimal tracking range, and execute the blade stall determination, that is, step S110. If the predetermined rotational speed relationship is not satisfied, it may be considered that the wind turbine is not currently in the optimal tracking range, and step S110 may not be performed. In this case, it may continue to monitor the relationship between the rotational speed of the wind turbine and the rated rotational speed of the wind turbine; and in response to the predetermined rotational speed relationship being satisfied, step S110 is performed.

In this way, it may firstly determine whether to perform the blade stall determination based on the rotational speed of the wind turbine, so as to ensure that the operating condition of the blade is acquired when the rotational speed state of the wind turbine is well, and further to improve the accuracy of the stall determination. However, this step may be omitted, and step S110 may be performed without the determination based on the rotational speed state of the wind turbine.

In step S120, wind speed-pitch angle relationships corresponding to the current blade roughness coefficient set may be determined based on a predetermined pitch angle condition.

In this step, the predetermined pitch angle condition may, for example, represent, for each of multiple blade roughness coefficients, pitch angle limits each corresponding to one of the multiple wind speeds.

As an example, the predetermined pitch-angle condition may include: multiple first wind speed-pitch angle conditions each corresponding to one of the multiple wind speeds under a clean blade state and multiple second wind speed-pitch angle conditions each corresponding to one of the multiple wind speeds under a rough blade state. In an embodiment, the multiple first wind speed-pitch angle conditions may represent respective pitch angle limits for the multiple wind speeds under the clean blade state; and the multiple second wind speed-pitch angle conditions may represent respective pitch angle limits for the multiple wind speeds under the rough blade state.

In this example, the wind speed-pitch angle relationships corresponding to the current blade roughness coefficient set may be determined as follows.

As shown in FIG. 4, in step S410, a first pitch angle corresponding to each wind speed of the multiple wind speeds under the clean blade state may be determined based on the multiple first wind speed-pitch angle conditions.

Since the first wind speed-pitch angle condition may represent the respective pitch angle limits for the multiple wind speeds under the clean blade state, the first pitch angle corresponding to each wind speed of the multiple wind speeds can be determined.

In step S420, a second pitch angle corresponding to each wind speed of the multiple wind speeds under the rough blade state may be determined based on the multiple second wind speed-pitch angle conditions.

Since the second wind speed-pitch angle condition may represent the respective pitch angle limits for the multiple wind speeds under the rough blade state, the second pitch angle corresponding to each wind speed of the multiple wind speeds can be determined.

In step S430, for each wind speed of the multiple wind speeds, the first pitch angle and the second pitch angle are adjusted based on the current blade roughness coefficient set, and a pitch angle corresponding to the wind speed and the current blade roughness coefficient set is determined, to determine the wind speed-pitch angle relationships.

As an example, in a case that the first pitch angle corresponding to each wind speed under the clean blade state and the second pitch angle corresponding to each wind speed under the rough blade state are known, calculation may be performed on the first pitch angle and the second pitch angle based on the current blade roughness coefficient set to obtain the pitch angle corresponding to the wind speed and the current blade roughness coefficient set.

For example, a pitch angle corresponding to a wind speed and the current blade roughness coefficient set may be represented by the following equation (4): $PitchK \left(i\right) = K \times PitchDesign \left(i\right) + \left(1-K\right) \times PitchRough \left(i\right)$ where *i* represents the *i*-th wind speed in m wind speeds in the current wind speed dataset, *i* may range from 0 to m, and m is the total number of wind speeds; K represents a statistical value of current blade roughness coefficients in the current blade roughness coefficient set, each current blade roughness coefficient for one of the m wind speeds, for example, an average value of the current blade roughness coefficients; PitchK (*i*) represents a pitch angle corresponding to the *i*-th wind speed and the blade roughness coefficient set; PitchDesign (*i*) represents a first pitch angle corresponding to the *i*-th wind speed; and PitchRough (*i*) represents a second pitch angle corresponding to the *i*-th wind speed.

Based on the above equation, a wind speed-pitch angle relationship between the *i*-th wind speed and the pitch angle PitchK (*i*) may be determined.

Although an example of determining the pitch angle corresponding to each current wind speed is described herein by using the equation (4), it is not limited thereto. For example, the equation (4) can be adjusted (for example, by introducing a weighting coefficient, or the like) to determine the pitch angle.

In addition, in the above example, the predetermined pitch angle condition may be determined in advance according to actual needs. For example, in an example in which the predetermined pitch angle condition includes multiple first wind speed-pitch angle conditions and multiple second wind speed-pitch angle conditions, the multiple first wind speed-pitch angle conditions for the multiple wind speeds and the multiple second wind speed-pitch angle condition for the multiple wind speeds may be respectively determined. For example, as shown in Table 1 below, WindSpeedPitchLimitDesign represents the multiple first wind speed-pitch angle conditions, WindSpeedPitchLimitRough represents the multiple second wind speed-pitch angle conditions, Wind*i* represents the i-th wind speed, i = 1, 2, ... 3, and m represents the total number of wind speeds.

**Table 1**

| | | | | | |
|---|---|---|---|---|---|
| WindSpeedPitchLim itDesign | Wind1 | Wind2 | Wind3 | ... | Windm |
| | PitchDesign1 | PitchDesign2 | PitchDesign3 | ... | PitchDesignm |
| WindSpeedPitchLim itRough | Wind1 | Wind2 | Wind3 | ... | Windm |
| | PitchRough1 | PitchRough2 | PitchRough3 | ... | PitchRoughm |
| WindSpeedPitchLimitK | Wind1 | Wind2 | Wind3 | ... | Windm |
| | PitchK(*i*)=K×PitchDesign(*i*)+(1-K)×PitchRough(*i*), where, *i*=1,2,3,......,m | | | | |

Based on the data in Table 1, a pitch angle PitchK (*i*) and a wind speed-pitch angle relationship WindSpeedPitchLimitK corresponding to each wind speed and the current blade roughness coefficient set may be determined.

It should be noted that although the example of the predetermined pitch angle condition is given by taking Table 1 as an example, it is not limited thereto. The predetermined pitch angle condition may be expressed as a form of a function or other discrete data forms, as long as the respective pitch angle limits corresponding to multiple wind speeds under a corresponding roughness degree are provided.

In this way, the pitch angle limit corresponding to the current wind speed in the current blade state can be determined, so as to provide guidance for determining the blade stall and the performing the pitch control of the wind turbine.

In step S130, a blade stall condition for the current wind speed data is determined based on the wind speed-pitch angle relationships and the current wind speed dataset.

As an example, blade stall may refer to a phenomenon where, upon the angle of attack for a blade section being greater than a certain critical value, the airflow separates from the blade surface. In this step, the blade stall condition may represent a relationship between a current pitch angle and a pitch angle limit corresponding to the current wind speed data. Here, the blade stall condition may be determined based on the wind speed-pitch angle relationship and the current wind speed data. In this way, it is possible to more accurately determine whether the wind turbine is currently in a stall state.

For example, if the wind speed-pitch angle relationship WindSpeedPitchLimitK is determined, a statistical value of wind speeds and a statistical value of pitch angles within a predetermined time period during the operation of the wind turbine, for example, an average value of the wind speeds within a minute and an average value of the pitch angles within a minute, may be obtained based on the current wind speed data. The calculation (for example, interpolation) can be performed on the statistical value of the wind speeds and the statistical value of the pitch angles based on the wind speed-pitch angle relationship WindSpeedPitchLimitK, to obtain a critical pitch angle PitchK for blade stall determination.

In this example, the blade stall condition may be PitchAvg1min<PitchK, where PitchAvg1min represents a statistical value of pitch angles within the predetermined time period during the operation of the wind turbine, such as an average value of pitch angles within a minute. In a case that the statistical value PitchAvg1min of the pitch angles satisfies the blade stall condition described above, it is determined that the blade stalls; and in a case that the statistical value PitchAvg1min of the pitch angles does not satisfy the blade stall condition described above, it is determined that the blade does not stall.

In step S140, in response to the blade stall condition indicating that the wind turbine is in a blade stall state, pitch control is performed on the wind turbine based on the current wind speed data and a predetermined pitch control relationship.

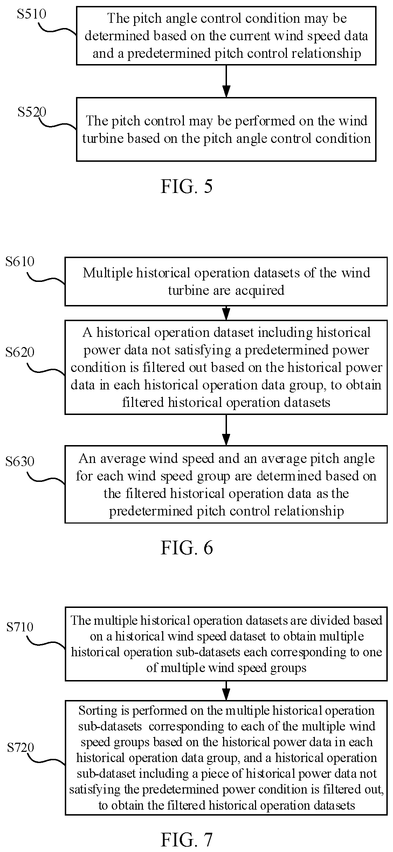

In this step, when the wind turbine is in the blade stall state, pitch control may be performed on the wind turbine based on the predetermined pitch control relationship. Here, the predetermined pitch control relationship may, for example, represent a relationship between the wind speed and the pitch angle in the stall state of the blade, and may be set according to actual needs. An example of determining a predetermined pitch control relationship will be described below with reference to FIG. 6 and FIG. 7.

As an example, in step S140, pitch control may be performed on the wind turbine in the following manner. As shown in FIG. 5, in step S510, the pitch angle control condition may be determined based on the current wind speed data and a predetermined pitch control relationship; and in step S520, the pitch control may be performed on the wind turbine based on the pitch angle control condition.

Here, the pitch angle control condition may indicate a pitch angle constriction for performing pitch control on the wind turbine, and the pitch angle control condition may be determined according to actual needs. For example, a minimum pitch angle of the wind turbine in the blade stall state may be determined in advance.

As an example, on the basis of rotational speed-based pitch control, wind speed-based pitch control may be introduced. In a case that the wind turbine enters a stall state, it may switch to the wind speed-based pitch control. The current minimum pitch angle is determined based on the current wind speed and the predetermined pitch control relationship as the pitch angle control condition, and the pitch position output by the wind turbine is limited. For example, the pitch angle reference value in a pitch control instruction may be greater than the minimum pitch angle.

In this way, by switching to the wind speed-based pitch control when the stall state of the wind turbine is determined, the power generation loss caused by the stall and the load risk after the blade stall can be effectively reduced.

An example of determining the predetermined pitch control relationship described above in step S140 will be described below with reference to FIG. 6 and FIG. 7. As an example, the predetermined pitch control relationship may be determined in the following manner.

As shown in FIG. 6, in step S610, multiple historical operation datasets of the wind turbine are acquired.

Here, a screening process for determining an optimal predetermined pitch control relationship may be performed in consideration of differences in blade pollution, air density or the like. Each historical operation dataset may include multiple historical historical operation data groups each including wind speed data, historical power data, and historical pitch angle data. For example, sampling at 0.1Hz may be performed to record data groups each including average values within every 10 seconds(s), and each recorded data group may include an average wind speed, average power, and average pitch angle within 10s.

In step S620, a historical operation dataset including historical power data not satisfying a predetermined power condition is filtered out based on the historical power data in each historical operation data group, to obtain filtered historical operation datasets.

Here, the predetermined power condition may indicate that the power corresponding to the historical power data is greater than a predetermined power. A dataset including data groups (each including an average wind speed, average power and an average pitch angle) each including a power not satisfying the predetermined power condition is filtered out from the historical operation data.

As an example, the predetermined power may be a power threshold determined in advance. In this case, the predetermined power condition may be a filtering condition for performing filtering based on a power value of the historical power data. As another example, the predetermined power condition may be represented as a predetermined percentage, percentile, or ranking. In this case, the predetermined power condition may be a filtering condition for performing filtering based on percentage, percentile, or ranking based on the powers corresponding to the multiple historical power datasets.

For example, the filtered historical operation datasets may be obtained in the following manner.

As shown in FIG. 7, in step S710, the multiple historical operation datasets are divided based on a historical wind speed dataset to obtain multiple historical operation sub-datasets each corresponding to one of multiple wind speed groups, the historical wind speed dataset comprising all pieces of the multiple historical operation datasets and the multiple wind speed groups being obtained by pre-dividing the historical wind speed dataset.

In an embodiment, the above optimizing can be performed based on the dividing of wind speeds, thereby enabling the optimizing to be performed near the transition operation state in which the wind turbine operates under a rated rotational speed with a power being less than a rated power, to reduce stall risk of the wind turbine. For example, the wind speed range corresponding to the transition operation state may be set to be the rated wind speed ±3 m/s. Then, the optimizing can be performed at 1m/s intervals based on the above wind speed range. In an example in which the optimizing is performed within a range from 9m/s to 15m/s, table 2 shows a result for the 9m/s wind speed group (that is, the wind speed is in the range of [9-0.5 m/s, 9+0.5 m/s]) obtained after the wind speed dividing.

**Table 2**

| 9m/s wind speed group | Wind speed | Power | Pitch angle |
|---|---|---|---|
| 1 | V1 | P1 | A1 |
| 2 | V2 | P2 | A2 |
| ... | ... | ... | ... |
| 200 | V200 | P200 | A200 |

Here, the number of data groups of each wind speed group may be greater than a predetermined number, for example, 200 (that is, data within about 30 minutes are included in each wind speed group), or the total number of data points of all wind speed groups is greater than 200×n×2, where n represents the number of wind speed groups. If the number of data groups in a wind speed group is less than 200, the wind speed group is discarded.

In step S720, sorting is performed on the multiple historical operation sub-datasets corresponding to each of the multiple wind speed groups based on the historical power data in each historical operation data group, and a historical operation sub-dataset including a piece of historical power data not satisfying the predetermined power condition is filtered out, to obtain the filtered historical operation datasets.

In this step, it may be considered that the piece of historical power data that does not satisfy the predetermined power condition in each wind speed group indicates a possible stall state, and therefore, the historical operation sub-dataset including the piece of historical power data that does not satisfy the predetermined power condition may be filtered out.

As an example, the multiple historical operation sub-datasets in each wind speed group may be sorted in an ascending order of power, be divided by using a quartile method, and historical operation sub-datasets each with a power in a lower quartile are filtered out. It is considered that a possible stall state corresponds to the lowest quartile in the wind speed group, and 75% of the data with high power are retained to obtain the filtered historical operation datasets.

In step S630, an average wind speed and an average pitch angle for each wind speed group are determined based on the filtered historical operation data as the predetermined pitch control relationship.

For the filtered historical operation datasets, an average value of pitch angles corresponding to the sub-datasets with a high power in each wind speed group and an average value of wind speeds corresponding to the sub-datasets with a high power in each wind speed group may be calculated respectively to obtain the average wind speed and the average pitch angle for each wind speed group, so as to determine the predetermined pitch control relationship to be used as a parameter for blade stall protection and pitch control strategy of the wind turbine.

In this way, the filtered historical operation datasets are obtained and the predetermined pitch control relationship is determined. Therefore, a historical operation dataset that may indicate a stall state are removed, and more reliable historical operation datasets are reserved for determining the predetermined pitch control relationship, thereby improving the pitch control effect of the wind turbine.

In addition, in an example in which the predetermined pitch control relationship is determined based on the manner described above, in step S510, as an example, the pitch angle control condition may be determined in the following manner.

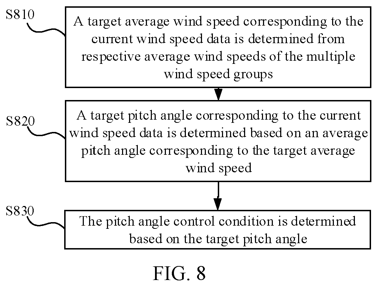

As shown in FIG. 8, in step S810, a target average wind speed corresponding to the current wind speed data is determined from respective average wind speeds of the multiple wind speed groups.

In this step, the target average wind speed corresponding to the current wind speed data is determined from the multiple average wind speeds based on the predetermined pitch control relationship. As an example, the target average wind speed may be the same as the current wind speed data, or may include two wind speeds closest to the current wind speed data, that is, a first average wind speed that is closest to the current wind speed data among average wind speeds that are greater than the current wind speed data and a second average wind speed that is closest to the current wind speed data among average wind speeds that are less than the current wind speed data.

In step S820, a target pitch angle corresponding to the current wind speed data is determined based on an average pitch angle corresponding to the target average wind speed.

In an example where the target average wind speed is the same as the current wind speed data, an average pitch angle corresponding to the target average wind speed may be determined as the target pitch angle corresponding to the current wind speed data.

In an example where the target average wind speed includes the first average wind speed and the second average wind speed, calculation can be performed on the first average pitch angle corresponding to the first average wind speed and the second average pitch angle corresponding to the second average wind speed to obtain the target pitch angle corresponding to the current wind speed data. For example, interpolation may be performed on the first average pitch angle and the second average pitch angle to obtain the target pitch angle.

In step S830, the pitch angle control condition is determined based on the target pitch angle.

Here, the pitch angle control condition may indicate that a minimum pitch angle for pitch control is equal to the target pitch angle. In an embodiment, the target pitch angle determined above may be determined as the minimum pitch angle for pitch control to generate the pitch angle control condition.

By determining the pitch angle control condition in this way, the pitch angle limit for the pitch control can be obtained by performing analysis through statistical operations of the historical operation data, so that the power loss caused by the stall can be reduced even in the case of blade stall.

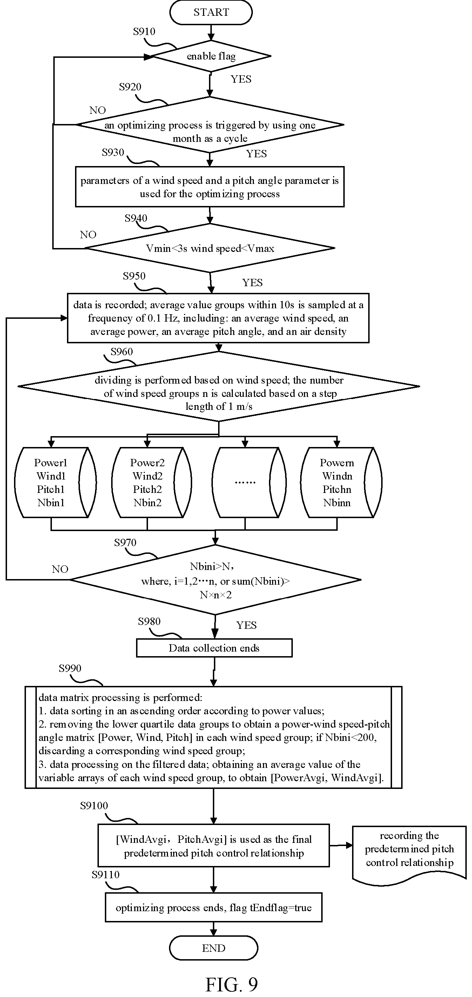

Based on the embodiments of the pitch control method for the wind turbine, an example of determining a predetermined pitch control relationship through a screening process according to an exemplary embodiment of the present disclosure is described below with reference to FIG. 9.

In step S910, an enable flag for determining whether to perform stall protection control may be detected. For example, in a case that the enable flag WsPaOptEnable equals true, the stall protection control logic may be started.

In step S920, an optimizing process for the predetermined pitch control condition may be triggered by using one month as a cycle, for starting the optimizing process. For example, step S1130 may be performed, in a case that an optimizing process flag bit OptEndflag equals false.

In step S930, parameters of a wind speed and a pitch angle parameter may be used for the optimizing process, and in step S940, it may be determined whether an average wind speed within three seconds after a current moment which may be any moment after starting the current optimizing process is within a predetermined range [Vmin, Vmax]. Here, the predetermined range may be set according to actual needs. In response to the average wind speed in three seconds being within the predetermined range [Vmin, Vmax], step S950 may be performed; and in response to the average wind speed in three seconds being not within the predetermined range [Vmin, Vmax], step S910 may be returned.

In step S950, data may be recorded. For example, average value groups within 10s may be sampled at a frequency of 0.1 Hz, and each average value group may include an average wind speed, an average power, an average pitch angle, and an air density.

In step S960, group dividing may be performed based on wind speed. For example, the number of wind speed groups n may be calculated based on a step length of 1 m/s, and each of data point groups in each wind speed group (for example, Nbin1, Nbin2,..., Nbinn) may include power data (for example, Power1, Power 2,..., Powern), wind speed data (for example, Wind1, Wind2 to Windn), and pitch angle data (for example, Pitch1, Pitch2,..., Pitchn).

In step S970, it may be determined whether the number of data point groups in each wind speed group is greater than a predetermined threshold N, for example, N may be 200; or it may be determined whether a total number of data point groups in all wind speed groups is greater than N×n×2. In response to the number of data point groups in each wind speed group being greater than the predetermined threshold N in step S970, step S980 may be performed; and in response to the number of data point groups in each wind speed group being less than or equal to the predetermined threshold N in step S970, step S950 may be returned.

In step S990, data matrix processing may be performed on the data point groups in each wind speed group. Specifically, sorting may be performed. For example, sorting may be performed in an ascending order according to power values in the data point groups. Data removal may be performed on the sorted data point groups, for example, the lower quartile data groups may be removed, and a power-wind speed-pitch angle matrix [Power, Wind, Pitch] in each wind speed group may be obtained. Here, in response to the Nbini<200 of a wind speed group, the wind speed group may be discarded. Data processing may be performed on the filtered data. For example, an average value of the variable arrays of each wind speed group may be obtained, and a matrix of an average power-average wind speed-average pitch angle [PowerAvgi, WindAvgi, PitchAvgi] may be obtained.

In step S9100, the obtained average wind speed WindAvgi and average pitch angle PitchAvgi may be used as the final predetermined pitch control relationship. Then, the predetermined pitch control relationship may be recorded, and in step S9110, the screening process is terminated. For example, the screening process flag bit ptEndflag may be set as true.

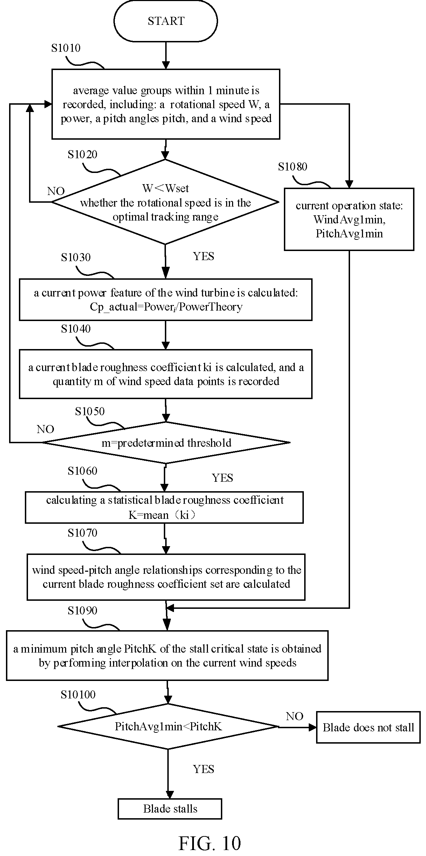

Based on the embodiments of the pitch control method for a wind turbine, a schematic flowchart illustrating an example of blade stall determination logic according to an exemplary embodiment of the present disclosure is described below with reference to FIG. 10.

As shown in FIG. 10, in step S1010, average value groups within 1 minute may be recorded, and each average value group may include an average value of rotational speeds (W) of the wind turbine, an average value of power(power), an average value of pitch angles (pitch), and an average value of wind speeds (windspeed).

In step S1020, it may be determined whether the rotational speed is in the optimal tracking range. For example, it may be determined whether W<Wset is satisfied, where W may represent an average rotational speed within 1 minute, and Wset may represent a rated rotational speed of the wind turbine. In response to the rotational speed being not in the optimal tracking section, step S1010 may be returned to continue recording average values within 1 minute; and in response to the rotational speed being in the optimal tracking section, step S1030 may be performed.

In step S1030, a current power feature of the wind turbine may be calculated, for example, the equation (1) Cp_actual=Power*ᵢ*/PowerTheory described above may be used for calculation, and the PowerTheory, for example, may be calculated by using the equation (2): PowerTheory=*k* · *ρ · v*³ *·* S described above.

In step S1040, a current blade roughness coefficient k*ᵢ* may be calculated based on the current power feature and the predetermined power feature, and a quantity m of wind speed data points may be recorded. For example, the current blade roughness coefficient may be calculated using the equation (3) described above: k*ᵢ* = (Cp_actual-Cp_rough)/(Cp_design-Cp_rough).

In step S1050, it may be determined whether the number of wind speed data points m reaches a predetermined threshold, and the predetermined threshold may be, for example, 100. In response to the predetermined threshold being not reached, step S1010 may be returned to continue recording the average value groups within 1 minute; and in response to the predetermined threshold being reached, step S1060 may be performed.

In step S1060, a statistical blade roughness coefficient K may be calculated, and the statistical blade roughness coefficient K may be an average value of m blade roughness coefficients, for example, the i-th blade roughness coefficient is k*ᵢ*.

In step S1070, wind speed-pitch angle relationships corresponding to the current blade roughness coefficient set may be calculated, and a wind speed-pitch angle relationship may be, for example, WindSpeedPitchLimitK provided in Table 1.

In step S1080, the current operation state of the wind turbine may be evaluated, for example, the average wind speed value WindAvg1min within 1 minute and the average pitch angle value PitchAvg1min within 1 minute may be calculated for the evaluation.

In step S1090, a minimum pitch angle PitchK of the stall critical state may be obtained based on the wind speed-pitch angle relationships corresponding to the blade roughness coefficient set by performing interpolation on the current wind speeds (for example, the average wind speed value WindAvg1min).

In step S10100, it may be determined whether the average pitch angle PitchAvg1min is less than the minimum pitch angle PitchK, and in response to the average pitch angle PitchAvg1min being less than the minimum pitch angle PitchK, it may be determined that the blade is in a stall state; and in response to the average pitch angle PitchAvg1mi being not less than the minimum pitch angle PitchK, it may be determined that the blade does not stall.

Although the steps are described above by way of example, an execution order of the steps is not limited to the order shown in the drawings and described above. For example, step S1080 may be performed at any time before step S1090 and after step S1010.

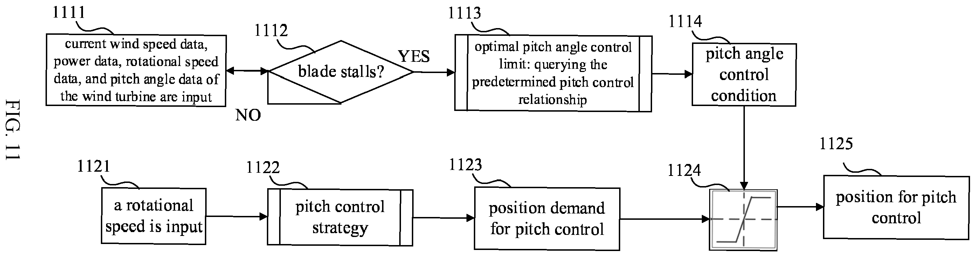

Based on the embodiments of the pitch control method for a wind turbine, a schematic diagram illustrating a stall protection control logic according to an exemplary embodiment of the present disclosure will be described below with reference to FIG. 11. FIG. 9 is a schematic flowchart illustrating an example of determining a predetermined pitch control relationship through a screening process in a pitch control method for a wind turbine according to an embodiment of the present disclosure.

Based on the embodiments of the pitch control method for a wind turbine, a schematic flowchart illustrating a control strategy according to an exemplary embodiment of the present disclosure wil described below with reference to FIG. 11.

As shown in FIG. 11, on one hand, in operation 1111, current wind speed data, power data, rotational speed data, and pitch angle data of the wind turbine may be input. In operation 1112, whether it is currently in a blade stall state may be determined based on the data and the method for determining a blade stall described above. In response to not being in a stall state, operation 1111 may be returned; in response to being in a stall state, operation 1113 may be performed.

In operation 1113, an optimal pitch angle control limit corresponding to the current wind speed data may be obtained by querying the predetermined pitch control relationship described above. In operation 1114, a pitch angle control condition may be obtained, for example, a minimum pitch angle corresponding to the current wind speed data and the current blade roughness coefficient, which is for pitch control of the wind turbine may be obtained.

On the other hand, in operation 1121, rotational speed data of the wind turbine may be input; in operation 1122, a pitch control strategy such as an existing pitch proportional integral derivative (PID) control may be adopted; and in operation 1123, a position demand for pitch control is acquired. In operation 1124, the position demand for pitch control may be limited based on the pitch angle control condition obtained in operation 1114, and in operation 1125, a final position for pitch control is obtained for performing pitch control of the wind turbine.

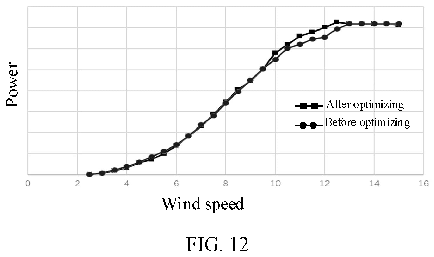

FIG. 12 illustrates an example of an optimal control power curve, which shows an optimization result and is obtained through performing stall protection based on the pitch control method for the wind turbine according to an exemplary embodiment of the present disclosure. As shown in FIG. 12, after power optimization is performed by implementing the pitch control method according to the embodiment of the present disclosure, it can be seen that, in the power curve of the wind turbine, compared with performing power optimization without implementing the method according to the present disclosure, power is significantly increased in the vicinity of the rated wind speed when the method according to the present disclosure is implemented. Here, FIG. 12 is intended to illustrate a comparative trend of power curves between implementing the method according to the present disclosure and not implementing the method according to the present disclosure, and therefore specific numerical values in the abscissa and ordinate are not shown.

It can be seen that compared with the conventional pitch control method in which a serious power loss is caused after stall, the method according to the present disclosure achieves the maximized output power of the wind turbine through the optimizing process of the relationship between the wind speed and the pitch angle of a single wind turbine, so that the loss of power generation after stall is reduced.

According to the pitch control method provided in the embodiments of the present disclosure, a more reasonable relationship between the wind speed and the pitch angle can be established on the basis of the operation data of the wind turbine itself, so that stall protection of the blade is achieved. The stall state of the wind turbine can be effectively determined, and it is switched to the wind speed-pitch angle control after the stall. As a result, the loss of power production caused by the stall and the load risk after the blade stall are effectively reduced.

In addition, according to the pitch control method provided in the embodiments of the present disclosure, the rough ratio of the current state of the blade is defined based on the data of the wind turbine in the optimal operation range, so that the predetermined pitch control relationship between the wind speed and the pitch angle is determined and serves as a basis for the stall determination. Then, it is possible to evaluate whether there is a stall phenomenon in the blade, the stall state of the wind turbine can be effectively determined, pitch control is performed based on the wind speed, and the stall protection control is timely performed.

According to a second aspect of the present disclosure, a computer device is provided. The computer device includes: at least one processor; at least one memory storing computer-executable instructions, where the computer-executable instructions, when executed by at least one processor, cause the at least one processor to perform the pitch control method for the wind turbine according to an exemplary embodiment of the present disclosure.

As an example, the computer device may be provided in a wind turbine or the computer device may be connected to a control system of the wind turbine.

For example, the computer device may be a personal computer (PC), a tablet device, a personal digital assistant, a smart phone, or other device capable of executing the set of instructions as described above. Here, the computer device is not necessarily required to be a single electronic device, but may be a collection of apparatus or circuits capable of executing the above instructions (or set of instructions) individually or jointly. Alternatively, the computer device may be part of an integrated control system or a system manager, or may be configured as a portable electronic device connected locally or remotely via an interface (for example, via wireless transmission).

In the computer device, a processor may include a central processing unit (CPU), a graphics processing unit (GPU), a programmable logic device, a dedicated processor system, a micro-controller, or a micro-processor. As an example, not a limitation, the processor may further include an analog processor, a digital processor, a micro-processor, a multi-core processor, a processor array, a network processor, and the like.

The processor may execute instructions or code stored in a memory, and the memory may further store data. Instructions and data may be transmitted and received through a network via a network interface device, and the network interface device may adopt any known transmission protocol.

The memory may be integrated with the processor. For example, a RAM or flash memory may be provided within an integrated circuit microprocessor or the like. In addition, the memory may include a stand-alone device, such as an external disk drive, a storage array, or any other storage device applicable to a database system. The memory and the processor may be operatively coupled to each other, or may communicate with each other through an I/O port, a network connection, or the like, so that the processor can read files stored in memory.

Additionally, the computer device may further include a video display (such as a liquid crystal display) and a user interaction interface (such as a keyboard, a mouse, and a touch input device). All components of the computer device may be connected to each other via a bus and/or network.

According to a third aspect of the present disclosure, a wind turbine is provided. The wind turbine may include the computer device according to an embodiment of the present disclosure.

According to a fourth aspect of the present disclosure, a computer-readable storage medium is provided. The instructions in a computer-readable storage medium, when executed by at least one processor, cause the at least one processor to implement the pitch control method for a wind turbine according to an exemplary embodiment of the present disclosure.

The control method for a wind turbine according to an embodiment of the present disclosure may be programmed as computer programs and stored in a computer-readable storage medium. Examples of the computer-readable storage medium include: a read-only memory (ROM), a random access programmable read-only memory (PROM), an electrically erasable programmable read-only memory (EEPROM), a random access memory (RAM), a dynamic random access memory (DRAM), a static random access memory (SRAM), a flash memory, a non-volatile memory, a CD-ROM, a CD-R, a CD+R, a CD-RW, a CD+RW, a DVD-ROM, a DVD-R, a DVD+R, a DVD-RW, a DVD+RW, a DVD-RAM, a BD-ROM, a BD-R, a BD-R LTH, a BD-RE, a Blu-ray or an optical disk memory, a hard disk drive (HDD), a solid state drive (SSD), a card memory (such as, a multimedia card, a secure digital (SD) card or an extreme digital (XD) card), a magnetic tape, a floppy disk, a magneto-optical data storage device, an optical data storage device, a hard disk, a solid state disk and any other devices. The any other devices are configured to store computer program and any associated data, data files and data structures in a non-transitory manner and provide the computer program and any associated data, data files and data structures to a processor or computer, so that the processor or computer can execute the computer program. In an example, the computer program and any associated data, data files and data structures are distributed over a networked computer system such that the computer program and the associated data, data files and data structures are stored, accessed and executed in a distributed fashion by one or more processors or computers.

The specific embodiments of the present disclosure are described in detail above. Although some embodiments are shown and described, it should be understood by those skilled in the art that modifications and variations may be made to these embodiments without departing from the principle and spirit of the present disclosure, the scope of which is defined by the claims and their equivalents, and such modifications and variations should fall within the protection scope of the claims of the present disclosure.

## Claims

1. A pitch control method for a wind turbine, comprising:
determining, based on a current power dataset of the wind turbine, a current blade roughness coefficient set corresponding to a current wind speed dataset;
determining, based on a predetermined pitch angle condition, wind speed-pitch angle relationships corresponding to the current blade roughness coefficient set;
determining, based on the wind speed-pitch angle relationship and the current wind speed dataset, a blade stall condition for the current wind speed dataset; and
performing pitch control on the wind turbine based on the current wind speed dataset and a predetermined pitch control relationship, in response to the blade stall condition indicating that the wind turbine is in a blade stall state.

2. The pitch control method according to claim 1, wherein the determining, based on current power dataset of the wind turbine, a current blade roughness coefficient set corresponding to the current wind speed dataset comprises:
determining, based on the current power dataset and predetermined power data corresponding to the current wind speed dataset, a current power feature set corresponding to the current wind speed dataset, wherein each current power feature in the current power feature set represents a relationship between a piece of power data in the current power dataset and the predetermined power data; and
determining the current blade roughness coefficient set based on the current power feature set and a predetermined power feature set corresponding to the current wind speed dataset.

3. The pitch control method according to claim 2, wherein each predetermined power feature in the predetermined power feature set comprises a first predetermined sub-feature corresponding to a clean blade state and a second predetermined sub-feature corresponding to a rough blade state, and wherein the current blade roughness coefficient is determined by:
determining, based on the first predetermined sub-feature and the second predetermined sub-feature and for each current power feature in the current power feature set, a power-roughness coefficient relationship between the current power feature and a corresponding current blade roughness coefficient; and
determining, based on each power roughness coefficient relationship, the current blade roughness coefficient set corresponding to the current power feature set.

4. The pitch control method according to claim 2 or 3, wherein the predetermined power dataset is determined based on current ambient data, the current wind speed dataset and blade sweeping data of the wind turbine.

5. The pitch control method according to claim 1, wherein the predetermined pitch angle condition comprises a plurality of first wind speed-pitch angle conditions each corresponding to one of a plurality of wind speeds in the current wind speed dataset under a clean blade state and a plurality of second wind speed-pitch angle conditions each corresponding to one of the plurality of wind speeds under a rough blade state, and wherein the wind speed-pitch angle relationship corresponding to the current blade roughness coefficient set is determined by:
determining, based on the plurality of first wind speed-pitch angle conditions, a first pitch angle corresponding to each wind speed of the plurality of wind speeds under the clean blade state;
determining, based on the plurality of second wind speed-pitch angle conditions, a second pitch angle corresponding to each wind speed of the plurality of wind speeds under the rough blade state; and
for each wind speed of the plurality of wind speeds, adjusting, based on the current blade roughness coefficient set, the first pitch angle and the second pitch angle, and determining a pitch angle corresponding to the wind speed and the current blade roughness coefficient set, to determine the wind speed-pitch angle relationship.

6. The pitch control method according to claim 1, wherein the predetermined pitch control relationship is determined by:
acquiring a plurality of historical operation datasets of the wind turbine, wherein the each historical operation dataset comprises a plurality of historical operation data groups each comprising a piece of historical wind speed data, a piece of historical power data, and a piece of historical pitch angle data;
filtering out, based on the historical power data in each historical operation data group, a historical operation dataset comprising a piece of historical power data not satisfying a predetermined power condition, to obtain filtered historical operation datasets, wherein the predetermined power condition indicates that power corresponding to the piece of historical power data is greater than predetermined power; and
determining, based on the filtered historical operation data, an average wind speed and an average pitch angle of each wind speed group as the predetermined pitch control relationship.

7. The pitch control method according to claim 6, wherein the filtered historical operation data is obtained by:
dividing the plurality of historical operation datasets based on the historical wind speed data to obtain a plurality of historical operation sub-datasets each corresponding to one of a plurality of wind speed groups which are obtained by pre-dividing the historical wind speed data; and
sorting the plurality of historical operation sub-datasets corresponding to each of the plurality of wind speed groups based on the historical power data in each historical operation data group, and filtering out a historical operation sub-dataset comprising a piece of historical power data not satisfying the predetermined power condition, to obtain the filtered historical operation datasets.

8. The pitch control method according to claim 7, wherein the performing pitch control for the wind turbine based on the current wind speed data and a predetermined pitch control relationship comprises:
determining a pitch angle control condition based on the current wind speed data and the predetermined pitch control relationship, wherein the predetermined pitch control relationship indicates a relationship between a wind speed and a pitch angle in the blade stall state; and
performing pitch control for the wind turbine based on the pitch angle control condition.

9. The pitch control method according to claim 8, wherein the pitch angle control condition is determined by:
determining a target average wind speed corresponding to the current wind speed data from respective average wind speeds of the plurality of wind speed groups;
determining, based on an average pitch angle corresponding to the target average wind speed, a target pitch angle corresponding to the current wind speed data; and
determining the pitch angle control condition based on the target pitch angle, wherein the pitch angle control condition indicates that a minimum pitch angle for pitch control is equal to the target pitch angle.

10. The pitch control method according to claim 1, further comprising:
acquiring current rotational speed data of the wind turbine; and
performing the determining a current blade roughness coefficient set corresponding to the current wind speed data, in response to the current rotational speed data and a predetermined rated rotational speed of the wind turbine satisfying a predetermined rotational speed relationship.

11. The pitch control method according to claim 1, wherein the predetermined pitch angle condition indicates, for each of a plurality of roughness coefficients, a plurality of pitch angle limits each corresponding to one of a plurality of wind speeds, and the blade stall condition represents a relationship between a current pitch angle and a pitch angle limit corresponding to the current wind speed data.

12. A computer device, comprising:
at least one processor;
at least one memory storing computer-executable instructions,
wherein the computer-executable instructions, when executed by the at least one processor, cause the at least one processor to perform the pitch control method for a wind turbine according to any one of claims 1 to 11.

13. A wind turbine, wherein the wind turbine comprises the computer device according to claim 12.

14. A computer-readable storage medium, wherein instructions in the computer-readable storage medium, when executed by at least one processor, cause the at least one processor to perform the pitch control method for a wind turbine according to any one of claims 1 to 11.
